# EUROPÄISCHE PATENTSCHRIFT

(11) **EP 4 494 249 B1**
(45) Veröffentlichungstag und Bekanntmachung des Hinweises auf die Patenterteilung: **06.05.2026**
(21) Anmeldenummer: 23708220.1
(22) Anmeldetag: 28.02.2023
(51) Int. Cl.: H02K 5/22, H02K 3/52, H02K 3/50, H02K 11/33

(54) **ELEKTROMOTOR**
ELECTRIC MOTOR
MOTEUR ÉLECTRIQUE

(30) Priorität: 16.03.2022 DE 102022000911
(43) Veröffentlichungstag der Anmeldung: 22.01.2025
(73) Patentinhaber: SEW-EURODRIVE GmbH & Co. KG, 76646 Bruchsal (DE)
(72) Erfinder: SIMON, Olaf, 76646 Bruchsal (DE); ENDERLE, Christian, 76356 Weingarten (DE); RÄDLE, Dennis, 76275 Ettlingen (DE)
(86) Internationale Anmeldenummer: PCT/EP2023/054959
(87) Internationale Veröffentlichungsnummer: WO 2023/174672

(56) Entgegenhaltungen:
- DE-A1- 102012 106 471
- DE-A1- 102014 201 488
- DE-A1- 102016 101 963

## Beschreibung

Die Erfindung betrifft einen Elektromotor, der einen Stator, welcher eine Mehrzahl von Statorwicklungen aufweist, und einen Rotor, welcher um eine Drehachse relativ zu dem Stator drehbar ist, umfasst, wobei leitfähige Drähte aus Wickelköpfen der Statorwicklungen heraus ragen.

Bekannte Statoren in Elektromotoren werden derart aufgebaut, dass die Enden des Kupferlackdrahtes der Wicklungen mit einer ummantelten Litze kontaktiert werden, welche in den Wickelkopf durch Bandagierung oder Verguss integriert ist. Diese Litzen werden durch das Motorgehäuse geführt und entweder in einem sich auf dem Motorgehäuse befindlichen Klemmenkasten mittels Kabelschuhen auf einem Kontaktierungsblock aufgelegt oder mittels angekrimpten Stiften in Flanschdosen eingeführt und damit befestigt. Auch bei der Montage von Leistungselektronik am Motorgehäuse werden in der Regel Kontaktierungsblöcke eingesetzt, welche die Litzen aufnehmen und auf eine Stiftleiste führen. Auf diese Kontaktierungsebene wird dann die mit einer Buchsenleiste ausgestattete Leistungselektronik aufgesteckt.

Der Einsatz von Litzen als Verbindungstechnik für Wickelpakete in Elektromotoren beinhaltet eine Reihe von Fertigungsschritten, die aufwendig und schwer zu automatisieren sind. Je nach Motorbauform mit Klemmenkasten, Steckverbinder oder aufgesetzter Leistungselektronik finden sehr unterschiedliche Bauformen der Gegenseite der Verbindung Einsatz. Dies erfordert eine Vielzahl unterschiedlicher Werkzeuge bis hin zu getrennten Montageplätzen. Weiterhin entsteht am Produkt nicht unerheblicher Platzbedarf. Vor allem bei der Kontaktierung von Leistungselektronik entstehen durch die Kontaktierungsebene Materialkosten, Montageaufwand und Volumen.

Aus dem Dokument DE 10 2009 051 979 A1 ist ein gattungsgemäßer Elektromotor bekannt, welcher einen Rotor und einen Stator aufweist. Der Stator umfasst Statorwicklungen und ist in einem Motorgehäuse angeordnet.

Aus dem Dokument DE 10 2012 024 581 A1 sind ein Elektromotor mit einem Stator und ein Verfahren zur Herstellung eines Elektromotors bekannt. Der Stator weist dabei mehrere Einzelwicklungen aus Wicklungsdraht auf, die mittels eines Verschaltungsrings miteinander elektrisch verschaltet werden.

Aus dem Dokument DE 10 2016 206 657 A1 ist ein Verschaltungsring zum Verschalten von Wicklungsdrähten eines Stators bekannt. Der Verschaltungsring weist einen Trägerring auf, an dem radial außen Kontaktelemente angeordnet sind.

Aus der DE 10 2019 218 442 A1 sind ein Stator einer elektrischen Maschine mit einer Verschaltungseinrichtung und eine elektrische Maschine bekannt.

Aus der DE 10 2016 101 963 A1 ist ein Elektromotor für eine Fluidpumpe bekannt. Der Elektromotor umfasst eine Abgriffplatte, welche Verschaltungskontakte zur elektrischen Verbindung mit Wicklungen des Stators aufweist.

Aus der DE DE10 2014 201 488 A1 ist ein Kreiselpumpenmotor bekannt, welcher einen Innenstator und einen Außenrotor aufweist. Der Innenstator umfasst eine Statorwicklung und Anschlussmittel für die Phasen-Wicklungsenden.

Aus der DE 10 2012 106 471 A1 ist eine Verschaltungseinrichtung für eine Stator-Anordnung eines Elektromotors bekannt. Der Elektromotor umfasst eine Leiterplatte, auf welcher eine Steuerelektronik angeordnet ist.

Aus der KR 10-2011-0135221 A sind ein Stator eines elektrischen Kompressors und verfahren zu dessen Herstellung bekannt.

Aus der DE 10 2016 208 150 A1 sind ein Stator einer elektrischen Maschine mit einer Verschaltungseinrichtung für Statorspulen und eine elektrische Maschine mit einem derartigen Stator bekannt.

Aus der DE 10 2015 225 538 A1 ist ein Stator einer elektrischen Maschine mit Statorzähnen bekannt.

Aus der DE 689 12 009 T2 ist ein Elektromotor bekannt, welcher mit einem Verbindungselement ausgestattet ist.

Aus der DE 10 2005 015 318 A1 ist ein elektrisches Gerät bekannt, welches ein Oberteil und ein Unterteil aufweist.

Aus der DE 10 2007 052 445 A1 ist ein elektrisches System bekannt, welches einen Elektromotor mit einem Anschlusskasten umfasst.

Der Erfindung liegt die Aufgabe zugrunde, einen Elektromotor weiterzubilden.

Die Aufgabe wird erfindungsgemäß durch einen Elektromotor mit den in Anspruch 1 angegebenen Merkmalen gelöst. Vorteilhafte Ausgestaltungen und Weiterbildungen sind Gegenstand der Unteransprüche.

Ein erfindungsgemäßer Elektromotor umfasst einen Stator, welcher eine Mehrzahl von Statorwicklungen aufweist, und einen Rotor, welcher um eine Drehachse relativ zu dem Stator drehbar ist. Dabei ragen elektrisch leitfähige Drähte aus Wickelköpfen der Statorwicklungen heraus. Die Drähte sind mit einem starren plattenförmigen Träger elektrisch verbunden. Der Träger ist als Leiterplatte ausgebildet und weist eine elektrisch isolierende Platte auf, auf welche elektrisch leitfähige Leiterbahnen aufgebracht sind. Dabei sind die Drähte mit Kontaktstiften stoffschlüssig verbunden, welche mit dem Träger stoffschlüssig verbunden sind. Der Träger weist Kontaktierungsbereiche zur Herstellung von Steckverbindungen auf. Die Kontaktierungsbereiche des Trägers sind als Buchsenleiste oder als Steckerleiste ausgebildet.

Die Kontaktstifte weisen einen quadratischen Querschnitt auf. In den Kontaktstiften ist jeweils eine Bohrung eingebracht, welche sich rechtwinklig zu der axialen Richtung erstreckt. Die Drähte, die mit den Kontaktstiften verbunden sind, sind jeweils durch eine solche Bohrung in einem Kontaktstift geführt.

Bei einem erfindungsgemäßen Elektromotor ist der Montageaufwand signifikant verringert, und auch das Produktvolumen ist verringert. Die Einsparung von Montageaufwand und Volumen erfolgt durch die Integration der Steckverbindungen in den Stator. Auf die Anwendung einer Litze wird vorzugsweise vollständig verzichtet.

Gemäß einer vorteilhaften Ausgestaltung der Erfindung ragen die Kontaktierungsbereiche des Trägers in radialer Richtung von der Drehachse weg. Somit ist die Ausdehnung des Elektromotors in axialer Richtung verringert.

Gemäß einer anderen vorteilhaften Ausgestaltung der Erfindung ragen die Kontaktierungsbereiche des Trägers in axialer Richtung von den Wickelköpfen weg. Somit ist die Ausdehnung des Elektromotors in radialer Richtung verringert.

Gemäß einer bevorzugten Ausgestaltung der Erfindung weist der Stator ein Statorpaket mit mehreren Statorblechen und ein hohlzylindrisches Statorgehäuse auf. Dabei sind die Statorwicklungen in dem Statorpaket angeordnet, und das Statorpaket ist in dem hohlzylindrischen Statorgehäuse angeordnet.

Gemäß einer vorteilhaften Ausgestaltung der Erfindung ist der Träger starr mit dem Statorgehäuse verbunden. Alternativ ist der Träger starr mit dem Statorpaket verbunden. Wenn das Statorpaket starr mit dem Statorgehäuse verbunden ist, so ist der Träger starr mit dem Statorgehäuse und mit dem Statorpaket verbunden.

Gemäß einer vorteilhaften Ausgestaltung der Erfindung erstreckt der Träger sich in Umfangsrichtung vollständig über das Statorgehäuse. Dadurch ist die mechanische Stabilität des Trägers erhöht.

Gemäß einer anderen vorteilhaften Ausgestaltung der Erfindung erstreckt der Träger sich in Umfangsrichtung nur teilweise über das Statorgehäuse. Somit ist der Platzbedarf des Trägers verringert.

Gemäß einer vorteilhaften Weiterbildung der Erfindung ist ein Aufsatzelement an dem Statorgehäuse befestigt, welches Kontaktierungselemente aufweist, die mit den Kontaktierungsbereichen des Trägers elektrisch und mechanisch verbunden sind. Die Kontaktierungselemente des Aufsatzelements und die Kontaktierungsbereiche des Trägers bilden somit Steckverbindungen.

Gemäß einer vorteilhaften Ausgestaltung der Erfindung weist das Aufsatzelement eine Platine auf, auf welche elektrisch leitfähige Leiterbahnen aufgebracht sind. Auch die Kontaktierungselemente sind auf die Platine aufgebracht.

Gemäß einer vorteilhaften Weiterbildung der Erfindung enthält das Aufsatzelement zusätzlich eine leiterplattenmontierbare Flanschdose. Die Platine ist dabei an der Flanschdose mechanisch befestigt. Dadurch ist ein Elektromotor mit steckbaren Anschlussleitungen realisierbar.

Gemäß einer vorteilhaften Weiterbildung der Erfindung enthält das Aufsatzelement zusätzlich Anschlusselemente für Litzen. Die Anschlusselemente sind dabei auf die Platine aufgebracht. Auf diese Weise ist ein sehr kompakter Elektromotor mit Kabelabgang realisierbar. Vorteilhaft wird das Aufsatzelement durch Umspritzen der Platine und des Kabelabgangs, insbesondere mit einem Kunststoff, realisiert.

Gemäß einer vorteilhaften Weiterbildung der Erfindung sind elektronische Bauelemente auf die Platine aufgebracht. Die elektronischen Bauelemente sind insbesondere Komponenten einer Leistungselektronik. Vorteilhafter Weise enthält die Leistungselektronik eine leiterplattenmontierbare Flanschdose, welchen den Anschluss einer externen elektrischen Energiequelle und eines Steuerungssystems erlaubt.

Gemäß einer vorteilhaften Weiterbildung der Erfindung enthält die Leistungselektronik eine Kontaktierungsleiste zur Zuführungsseite der elektrischen Leistung. Die Kontaktierungsleiste entspricht mechanisch und elektrisch den Kontaktierungsbereichen des Stators. Auch eine von dem Elektromotor abgesetzte Elektronik ist denkbar. In einer vorteilhaften Ausprägung ist die Leistungselektronik auf ein Montageelement aufgesetzt, welches eine der Kontaktierungsleiste entsprechendes Element aufweist.

Gemäß einer vorteilhaften Ausgestaltung der Erfindung umfassen die Kontaktierungsbereiche des Trägers mindestens ein Kontaktelement zum Anschluss eines Temperaturfühlers, eines Winkellagegebers, einer Bremse und/oder eines Kommunikationsbusses.

Gemäß einer vorteilhaften Weiterbildung der Erfindung umfasst der Elektromotor eine Mehrzahl von Haltestiften, welche mit dem Träger stoffschlüssig verbunden sind. Dabei sind die Haltestifte in radialer Richtung zwischen der Drehachse und den Wickelköpfen angeordnet, und die Wickelköpfe sind in radialer Richtung zwischen den Kontaktstiften und der Drehachse angeordnet. Durch die Haltestifte ist die mechanische Stabilität des Trägers in dem Statorgehäuse vorteilhaft erhöht.

Gemäß einer vorteilhaften Ausgestaltung der Erfindung weist der Stator einen Wicklungsträger aus einem elektrisch isolierenden Material auf. Dabei sind die Kontaktstifte sowie die Haltestifte stoffschlüssig und/oder kraftschlüssig mit dem Wicklungsträger verbunden. Dadurch ist die mechanische Stabilität des Trägers in dem Statorgehäuse weiter erhöht.

Gemäß einer vorteilhaften Weiterbildung der Erfindung weisen die Haltestifte jeweils eine tellerartige Verbreiterung auf, welche an einer Stirnseite des Wicklungsträgers anliegt. Bei der Montage des Elektromotors werden zunächst die Haltestifte mit dem Träger verbunden. Anschließend werden die Haltestifte auf die Stirnseite des Wicklungsträgers aufgesetzt und der Träger wird mit den Haltestiften gegen den Wicklungsträger gedrückt. Dabei werden die Haltestifte in Vertiefungen in dem Wicklungsträger hinein bewegt und mit dem Wicklungsträger verbunden. Die tellerartigen Verbreiterungen der Haltestifte dienen dabei als Abstandshalter und stellen eine korrekte Ausrichtung des Trägers relativ zu dem Wicklungsträger in axialer Richtung sicher.

Gemäß einer bevorzugten Ausgestaltung der Erfindung sind die Kontaktstifte und die Haltestifte gleichartig ausgebildet. Dadurch ist die Anzahl der verschiedenen Bauelemente des Elektromotors verringert, und die Lagerhaltung ist vereinfacht.

Gemäß einer vorteilhaften Weiterbildung der Erfindung weisen die Kontaktstifte jeweils eine tellerartige Verbreiterung auf, welche an dem Träger anliegt. Bei der Montage des Elektromotors werden zunächst die Kontaktstifte mit dem Wicklungsträger verbunden. Anschließend werden die Drähte mit den Kontaktstiften verbunden. Danach wird der Träger derart auf die Kontaktstifte aufgesetzt, dass die Kontaktstifte Bohrungen in dem Träger durchragen. Anschließend werden die Kontaktstifte mit dem Träger verbunden. Die tellerartigen Verbreiterungen der Kontaktstifte dienen dabei als Abstandshalter und stellen eine korrekte Ausrichtung des Trägers relativ zu dem Wicklungsträger in axialer Richtung sicher.

Für den Fachmann ergeben sich innerhalb des durch den unabhängigen Anspruch definierten Schutzbereichs weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Schnittdarstellung eines Elektromotors gemäß einer ersten Ausführungsform,
- Figur 2:: eine schematische Schnittdarstellung eines Elektromotors gemäß einer zweiten Ausführungsform und
- Figur 3:: eine schematische Schnittdarstellung eines Elektromotors gemäß einer dritten Ausführungsform.

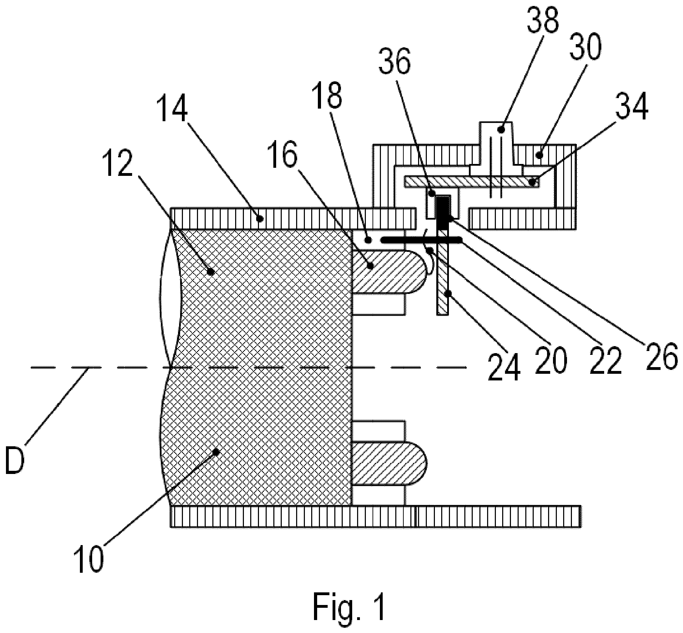

Figur 1 zeigt eine schematische Schnittdarstellung eines Elektromotors gemäß einer ersten Ausführungsform. Der Elektromotor ist eine elektrische Maschine und umfasst einen Stator 10 sowie einen hier nicht dargestellten Rotor. Der Rotor ist um eine Drehachse D relativ zu dem Stator 10 drehbar.

Der Stator 10 weist eine Mehrzahl von Statorwicklungen auf, welche aus elektrisch leitfähigen Drähten 20 gewickelt sind. Die Drähte 20 sind beispielsweise mit einer isolierenden Lackschicht überzogen. Endbereiche der Statorwicklungen bilden Wickelköpfe 16. Die Drähte 20 ragen mit Endbereichen aus den Wickelköpfen 16 der Statorwicklungen heraus.

Der Stator 10 weist ein Statorpaket 12 auf. Das Statorpaket 12 umfasst mehrere miteinander verschweißte ringförmige Statorbleche. Das Statorpaket 10 ist hohlzylindrisch ausgestaltet und weist auf seiner nach innen gerichteten Oberfläche eine Mehrzahl von Nuten auf. Alternativ weist das Statorpaket 12 auf seiner nach innen gerichteten Oberfläche eine Mehrzahl von Zähnen auf.

Der Stator 10 weist einen Wicklungsträger 18 aus einem elektrisch isolierenden Material auf. Der Wicklungsträger 18 umgibt die Nuten, alternativ die Zähne, des Statorpakets 12. Der Wicklungsträger 18 trägt die Statorwicklungen. Die Statorwicklungen sind somit in dem Statorpaket 12 angeordnet.

Der Stator 10 weist ein hohlzylindrisches Statorgehäuse 14 auf. Das Statorpaket 12 und die Statorwicklungen sind in dem hohlzylindrischen Statorgehäuse 14 angeordnet. Das Statorgehäuse 14 und das Statorpaket 12 umgeben die Drehachse D koaxial. Die Wickelköpfe 16 der Statorwicklungen ragen in axialer Richtung aus dem Statorpaket 12 heraus.

Der Elektromotor umfasst einen starren plattenförmigen Träger 24. Der Träger 24 ist als Leiterplatte ausgebildet und weist eine elektrisch isolierende Platte auf. Auf die Platte sind elektrisch leitfähige Leiterbahnen aufgebracht. Der Träger 24 ist starr mit dem Statorgehäuse 14 verbunden, beispielsweise mittels hier nicht dargestellter Schrauben.

Der Elektromotor umfasst eine Mehrzahl von Kontaktstiften 22. Die Kontaktstifte 22 sind mit dem Träger 24 stoffschlüssig verbunden, insbesondere verlötet. Die aus den Wickelköpfen 16 der Statorwicklungen herausragenden Drähte 20 sind unmittelbar mit Kontaktstiften 22 stoffschlüssig verbunden, beispielsweise verlötet oder verschweißt, oder auch verpresst. Somit sind die Drähte 20 mit dem plattenförmigen Träger 24 elektrisch verbunden.

Der Träger 24 weist Kontaktierungsbereiche 26 zur Herstellung von Steckverbindungen auf. Die Kontaktierungsbereiche 26 sind vorliegend als Steckerleiste ausgebildet. Die Kontaktierungsbereiche 26 des Trägers 24 ragen vorliegend in radialer Richtung von der Drehachse D des Elektromotors weg.

Der Elektromotor umfasst ein Aufsatzelement 30. Das Aufsatzelement 30 weist Kontaktierungselemente 36 auf. Die Kontaktierungselemente 36 des Aufsatzelements 30 sind vorliegend als Buchsenleiste ausgebildet. Die Kontaktierungselemente 36 des Aufsatzelements 30 sind mit den Kontaktierungsbereichen 26 des Trägers 24 elektrisch und mechanisch verbunden. Die Buchsenleiste ist also auf die Steckerleiste aufgesteckt. Das Aufsatzelement 30 ist somit an dem Statorgehäuse 14 befestigt.

Das Aufsatzelement 30 weist eine Platine 34 auf. Auf die Platine 34 sind elektrisch leitfähige Leiterbahnen aufgebracht. Auf die Platine 34 sind auch die Kontaktierungselemente 36 aufgebracht.

Auf die Platine 34 sind ferner Anschlusselemente 38 aufgebracht. Die Anschlusselemente 38 des Aufsatzelements 30 sind vorzugsweise identisch zu den Kontaktierungsbereiche 26 des Trägers 24 ausgebildet. Die Anschlusselemente 38 sind aber beispielsweise auch als Schneidklemmen ausgebildet. Die besagten Anschlusselemente 38 dienen unter anderen zum Anschluss des Elektromotors an eine elektrische Energiequelle sowie zum Anschluss von Signalleitungen.

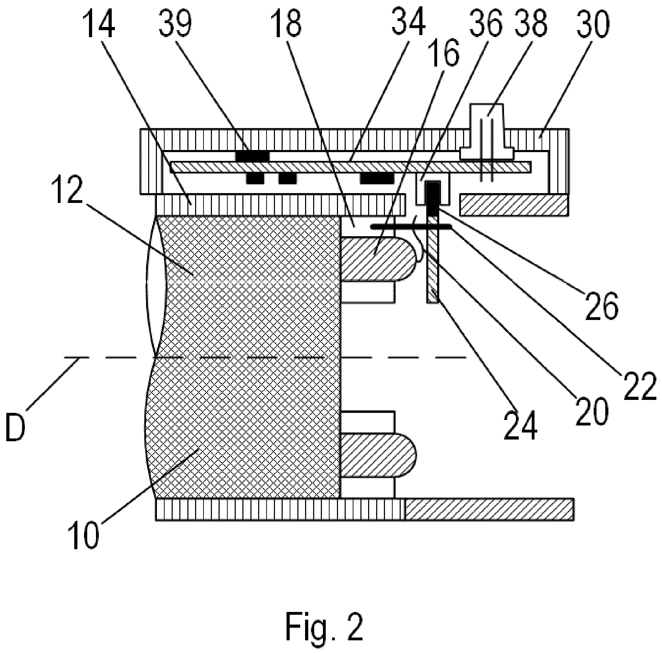

Figur 2 zeigt eine schematische Schnittdarstellung eines Elektromotors gemäß einer zweiten Ausführungsform. Der Elektromotor gemäß der zweiten Ausführungsform ist ähnlich zu dem in Figur 1 gezeigten Elektromotor gemäß der ersten Ausführungsform ausgebildet und umfasst ebenfalls einen Stator 10 sowie einen hier nicht dargestellten Rotor. Der Rotor ist um eine Drehachse D relativ zu dem Stator 10 drehbar.

Der Elektromotor umfasst ebenfalls ein Aufsatzelement 30, welches Kontaktierungselemente 36 aufweist. Die Kontaktierungselemente 36 des Aufsatzelements 30 sind vorliegend als Buchsenleiste ausgebildet. Die Kontaktierungselemente 36 des Aufsatzelements 30 sind mit den Kontaktierungsbereichen 26 des Trägers 24 elektrisch und mechanisch verbunden. Die Buchsenleiste ist also auf die Steckerleiste aufgesteckt. Das Aufsatzelement 30 ist somit an dem Statorgehäuse 14 befestigt.

Das Aufsatzelement 30 weist ebenfalls eine Platine 34 auf, auf welcher elektrisch leitfähige Leiterbahnen aufgebracht sind. Auf die Platine 34 sind auch die Kontaktierungselemente 36 aufgebracht.

Auf die Platine 34 sind ferner Anschlusselemente 38 aufgebracht. Die Anschlusselemente 38 des Aufsatzelements 30 sind vorzugsweise identisch zu den Kontaktierungsbereiche 26 des Trägers 24 ausgebildet. Die Anschlusselemente 38 sind aber beispielsweise auch als Schneidklemmen ausgebildet. Die besagten Anschlusselemente 38 dienen unter anderen zum Anschluss des Elektromotors an eine elektrische Energiequelle sowie zum Anschluss von Signalleitungen.

Auf die Platine 34 sind auch elektronische Bauelemente 39 aufgebracht. Die elektronischen Bauelemente 39 sind Komponenten einer Leistungselektronik.

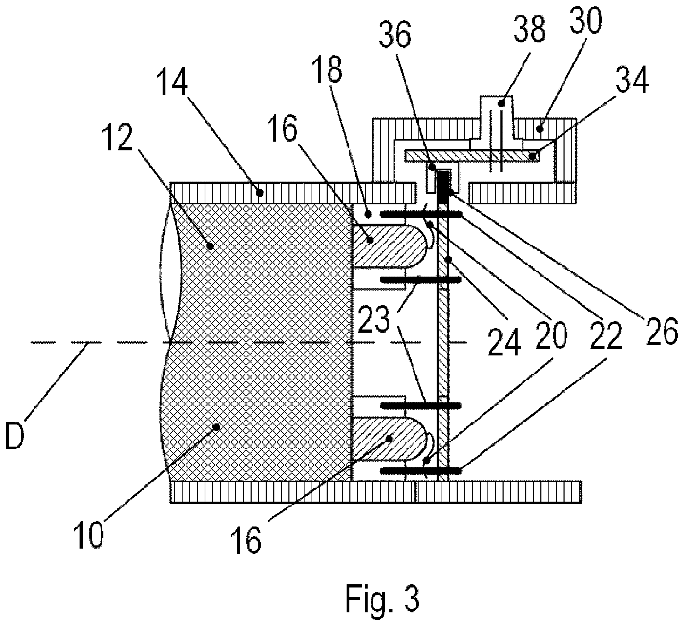

Figur 3 zeigt eine schematische Schnittdarstellung eines Elektromotors gemäß einer dritten Ausführungsform. Der Elektromotor gemäß der dritten Ausführungsform ist ähnlich zu dem in Figur 1 gezeigten Elektromotor gemäß der ersten Ausführungsform ausgebildet und umfasst ebenfalls einen Stator 10 sowie einen hier nicht dargestellten Rotor. Der Rotor ist um eine Drehachse D relativ zu dem Stator 10 drehbar.

Der Stator 10 weist ebenfalls eine Mehrzahl von Statorwicklungen auf, welche aus elektrisch leitfähigen Drähten 20 gewickelt sind. Die Drähte 20 sind beispielsweise mit einer isolierenden Lackschicht überzogen. Endbereiche der Statorwicklungen bilden Wickelköpfe 16. Die Drähte 20 ragen mit Endbereichen aus den Wickelköpfen 16 der Statorwicklungen heraus.

Der Stator 10 weist ebenfalls ein Statorpaket 12 auf. Das Statorpaket 12 umfasst mehrere miteinander verschweißte ringförmige Statorbleche. Das Statorpaket 10 ist hohlzylindrisch ausgestaltet und weist auf seiner nach innen gerichteten Oberfläche eine Mehrzahl von Nuten auf. Alternativ weist das Statorpaket 12 auf seiner nach innen gerichteten Oberfläche eine Mehrzahl von Zähnen auf.

Der Stator 10 weist ebenfalls einen Wicklungsträger 18 aus einem elektrisch isolierenden Material auf. Der Wicklungsträger 18 umgibt die Nuten, alternativ die Zähne, des Statorpakets 12. Der Wicklungsträger 18 trägt die Statorwicklungen. Die Statorwicklungen sind somit in dem Statorpaket 12 angeordnet.

Der Stator 10 weist ebenfalls ein hohlzylindrisches Statorgehäuse 14 auf. Das Statorpaket 12 und die Statorwicklungen sind in dem hohlzylindrischen Statorgehäuse 14 angeordnet. Das Statorgehäuse 14 und das Statorpaket 12 umgeben die Drehachse D koaxial. Die Wickelköpfe 16 der Statorwicklungen ragen in axialer Richtung aus dem Statorpaket 12 heraus.

Der Elektromotor umfasst ebenfalls einen starren plattenförmigen Träger 24. Der Träger 24 ist als Leiterplatte ausgebildet und weist eine elektrisch isolierende Platte auf. Auf die Platte sind elektrisch leitfähige Leiterbahnen aufgebracht. Der Träger 24 ist starr mit dem Statorgehäuse 14 verbunden, beispielsweise mittels hier nicht dargestellter Schrauben.

Der Elektromotor umfasst ebenfalls eine Mehrzahl von Kontaktstiften 22. Die Kontaktstifte 22 sind mit dem Träger 24 stoffschlüssig verbunden, insbesondere verlötet. Die aus den Wickelköpfen 16 der Statorwicklungen herausragenden Drähte 20 sind unmittelbar mit Kontaktstiften 22 stoffschlüssig verbunden, beispielsweise verlötet oder verschweißt, oder auch verpresst. Somit sind die Drähte 20 mit dem plattenförmigen Träger 24 elektrisch verbunden.

Der Träger 24 weist ebenfalls Kontaktierungsbereiche 26 zur Herstellung von Steckverbindungen auf. Die Kontaktierungsbereiche 26 sind vorliegend als Steckerleiste ausgebildet. Die Kontaktierungsbereiche 26 des Trägers 24 ragen vorliegend in radialer Richtung von der Drehachse D des Elektromotors weg.

Der Träger 24 ist annähernd in Form eines Kreisrings ausgebildet und erstreckt sich in Umfangsrichtung vollständig über das Statorgehäuse 14. Der Träger 24 weist zentral eine kreisrunde Öffnung auf, durch welche der Rotor ragt. Die elektrisch leitfähigen Leiterbahnen des Trägers 24 verbinden unter anderem die Kontaktstifte 22 elektrisch miteinander sowie mit den Kontaktierungsbereichen 26.

Der Träger 24 weist ferner elektronische Bauelemente auf, die auf der Platte des Trägers 24 angeordnet sind. Die Bauelemente sind mit den Leiterbahnen des Trägers 24 stoffschlüssig verbunden, beispielsweise verlötet. Die elektrisch leitfähigen Leiterbahnen des Trägers 24 verbinden die Bauelemente elektrisch beispielsweise mit den Kontaktstiften 22 sowie mit den Kontaktierungsbereichen 26. Die elektronischen Bauelemente umfassen beispielsweise einen Temperatursensor, einen Magnetfeldsensor, einen Stromsensor oder einen Halbleiterschalter, insbesondere einen MOSFET.

Der Wicklungsträger 18 weist Vertiefungen in Form von Sacklöchern auf, welche sich von einer dem Träger 24 zugewandten Stirnseite in axialer Richtung erstrecken. Die Kontaktstifte 22 sind jeweils in eine Vertiefung des Wicklungsträger 18 eingesetzt. Die Kontaktstifte 22 sind stoffschlüssig, insbesondere durch Verkleben, und/oder kraftschlüssig, insbesondere durch Einpressen, mit dem Wicklungsträger 18 verbunden.

Der Elektromotor umfasst ebenfalls eine Mehrzahl von Haltestiften 23. Die Haltestifte 23 sind mit dem Träger 24 stoffschlüssig verbunden, insbesondere verlötet. Die Haltestifte 23 sind ebenfalls jeweils in eine Vertiefung des Wicklungsträger 18 eingesetzt. Die Haltestifte 23 sind stoffschlüssig, insbesondere durch Verkleben, und/oder kraftschlüssig, insbesondere durch Einpressen, mit dem Wicklungsträger 18 verbunden.

Die Kontaktstifte 22 sind in radialer Richtung zwischen den Wickelköpfen 16 und dem Statorgehäuse 14 angeordnet. Die Wickelköpfe 16 sind somit in radialer Richtung zwischen den Kontaktstiften 22 und der Drehachse D angeordnet. Die Haltestifte 23 sind in radialer Richtung zwischen der Drehachse D und den Wickelköpfen 16 angeordnet. Die Vertiefungen in dem Wicklungsträger 18 weisen jeweils im Bereich der Stirnseite des Wicklungsträgers 18 eine trichterförmige Verbreiterung auf, welche das Einführen der Kontaktstifte 22 sowie der Haltestifte 23 in axialer Richtung erleichtert.

Die Kontaktstifte 22 weisen einen quadratischen Querschnitt auf. Die Kontaktstifte 22 sind derart angeordnet, dass jeweils zwei der Seitenflächen tangential bezüglich der Drehachse D ausgerichtet sind. In den Kontaktstiften 22 ist jeweils eine Bohrung eingebracht, welche sich rechtwinklig zu der axialen Richtung erstreckt. Die Drähte 20, die mit den Kontaktstiften 22 verbunden sind, sind jeweils durch eine solche Bohrung in einem Kontaktstift 22 geführt.

Die Kontaktstifte 22 weisen jeweils eine hier nicht dargestellte tellerartige Verbreiterung auf. Die tellerartigen Verbreiterungen der Kontaktstifte 22 liegen bündig an dem Träger 24 an. Die Haltestifte 23 weisen jeweils eine hier nicht dargestellte tellerartige Verbreiterung auf. Die tellerartigen Verbreiterungen der Haltestifte 23 liegen bündig an der Stirnseite des Wicklungsträgers 18 an.

Die Kontaktstifte 22 und die Haltestifte 23 sind vorliegend gleichartig ausgebildet und weisen insbesondere weisen jeweils eine tellerartige Verbreiterung auf. Die Kontaktstifte 22 und die Haltestifte 23 sind dabei mit entgegengesetzten Orientierungen in dem Elektromotor angeordnet. Die tellerartigen Verbreiterungen der Kontaktstifte 22 sind dem Wicklungsträger 18 abgewandt und dem Träger 24 zugewandt. Die tellerartigen Verbreiterungen der Haltestifte 23 sind dem Wicklungsträger 18 zugewandt und dem Träger 24 abgewandt.

### Bezugszeichenliste

- 10: Stator
- 12: Statorpaket
- 14: Statorgehäuse
- 16: Wickelkopf
- 18: Wicklungsträger
- 20: Draht
- 22: Kontaktstift
- 23: Haltestift
- 24: Träger
- 26: Kontaktierungsbereich
- 30: Aufsatzelement
- 34: Platine
- 36: Kontaktierungselement
- 38: Anschlusselement
- 39: elektronisches Bauelement
- D: Drehachse

## Patentansprüche

1. Elektromotor, umfassend
einen Stator (10), welcher eine Mehrzahl von Statorwicklungen aufweist, und
einen Rotor, welcher um eine Drehachse (D) relativ zu dem Stator (10) drehbar ist, wobei elektrisch leitfähige Drähte (20) aus Wickelköpfen (16) der Statorwicklungen heraus ragen, wobei
die Drähte (20) mit einem starren plattenförmigen Träger (24) elektrisch verbunden sind, und wobei
der Träger (24) als Leiterplatte ausgebildet ist und eine elektrisch isolierende Platte aufweist, auf welche elektrisch leitfähige Leiterbahnen aufgebracht sind, und wobei die Drähte (20) mit Kontaktstiften (22) stoffschlüssig verbunden sind,
welche mit dem Träger (24) axial vorstehend stoffschlüssig verbunden sind, und wobei
der Träger (24) Kontaktierungsbereiche (26) zur Herstellung von Steckverbindungen aufweist, wobei
die Kontaktierungsbereiche (26) als Buchsenleiste oder als Steckerleiste ausgebildet sind, **dadurch gekennzeichnet, dass**
die Kontaktstifte (22) einen quadratischen Querschnitt aufweisen und dass,
in den Kontaktstiften (22) jeweils eine Bohrung eingebracht ist, welche sich rechtwinklig zu der axialen Richtung erstreckt, und dass
die Drähte (20), die mit den Kontaktstiften (22) verbunden sind, jeweils durch eine solche Bohrung in einem Kontaktstift (22) geführt sind.

2. Elektromotor nach Anspruch 1, **dadurch gekennzeichnet, dass**
die Kontaktierungsbereiche (26) des Trägers (24) in radialer Richtung von der Drehachse (D) weg ragen.

3. Elektromotor nach Anspruch 1, **dadurch gekennzeichnet, dass**
die Kontaktierungsbereiche (26) des Trägers (24) in axialer Richtung von den Wickelköpfen (16) weg ragen.

4. Elektromotor nach einem der vorangegangenen Ansprüche, **dadurch gekennzeichnet, dass** der Stator (10) ein Statorpaket (12) mit mehreren Statorblechen und ein hohlzylindrisches Statorgehäuse (14) aufweist, wobei
die Statorwicklungen in dem Statorpaket (12) angeordnet sind, und
das Statorpaket (12) in dem hohlzylindrischen Statorgehäuse (14) angeordnet ist, und dass der Träger (24) starr mit dem Statorgehäuse (14) verbunden ist.

5. Elektromotor nach Anspruch 4, **dadurch gekennzeichnet, dass**
der Träger (24) sich in Umfangsrichtung vollständig über das Statorgehäuse (14) erstreckt.

6. Elektromotor nach Anspruch 4, **dadurch gekennzeichnet, dass**
der Träger (24) sich in Umfangsrichtung nur teilweise über das Statorgehäuse (14) erstreckt.

7. Elektromotor nach einem der Ansprüche 4 bis 6, **dadurch gekennzeichnet, dass**
ein Aufsatzelement (30) an dem Statorgehäuse (14) befestigt ist,
welches Kontaktierungselemente (36) aufweist, die mit den Kontaktierungsbereichen (26) des Trägers (24) elektrisch und mechanisch verbunden sind, und dass
das Aufsatzelement (30) eine Platine (34) aufweist, auf welche elektrisch leitfähige Leiterbahnen aufgebracht sind, und dass
die Kontaktierungselemente (36) auf die Platine (34) aufgebracht sind, und dass elektronische Bauelemente (39) auf die Platine (34) aufgebracht sind.

8. Elektromotor nach einem der vorangegangenen Ansprüche, **dadurch gekennzeichnet, dass** die Kontaktierungsbereiche (26) des Trägers (24) mindestens ein Kontaktelement zum Anschluss eines Temperaturfühlers, eines Winkellagegebers, einer Bremse und/oder eines Kommunikationsbusses umfassen.

9. Elektromotor nach einem der vorangegangenen Ansprüche, **dadurch gekennzeichnet, dass** der Elektromotor eine Mehrzahl von Haltestiften (23) umfasst, welche mit dem Träger (24) stoffschlüssig verbunden sind, und dass
die Haltestifte (23) in radialer Richtung zwischen der Drehachse (D) und den Wickelköpfen (16) angeordnet sind, und dass
die Wickelköpfe (16) in radialer Richtung zwischen den Kontaktstiften (22) und der Drehachse (D) angeordnet sind.

10. Elektromotor nach Anspruch 9, **dadurch gekennzeichnet, dass**
der Stator (10) einen Wicklungsträger (18) aus einem elektrisch isolierenden Material aufweist, und dass
die Kontaktstifte (22) sowie die Haltestifte (23) stoffschlüssig und/oder kraftschlüssig mit dem Wicklungsträger (18) verbunden sind.

11. Elektromotor nach Anspruch 10, **dadurch gekennzeichnet, dass**
die Haltestifte (23) jeweils eine tellerartige Verbreiterung aufweisen, welche an einer Stirnseite des Wicklungsträgers (18) anliegt.

12. Elektromotor nach einem der Ansprüche 9 bis 11, **dadurch gekennzeichnet, dass**
die Kontaktstifte (22) und die Haltestifte (23) gleichartig ausgebildet sind.

13. Elektromotor nach einem der vorangegangenen Ansprüche, **dadurch gekennzeichnet, dass**
die Kontaktstifte (22) jeweils eine tellerartige Verbreiterung aufweisen, welche an dem Träger (24) anliegt.

## Claims

1. Electric motor comprising
a stator (10) having a plurality of stator windings, and
a rotor that is rotatable relative to the stator (10) about an axis of rotation (D), electrically conductive wires (20) projecting out of winding overhangs (16) of the stator windings,
the wires (20) being electrically connected to a rigid plate-like support (24), and
the support (24) being formed as a printed circuit board and having an electrically insulating plate to which electrically conductive conducting tracks are applied, and
the wires (20) being integrally bonded to contact pins (22), which are integrally bonded to the support (24) in an axially protruding manner, and
the support (24) having contacting regions (26) for establishing plug connections,
the contacting regions (26) being formed as a socket connector or connector strip, **characterised in that**
the contact pins (22) have a square cross section, and **in that**
a hole extending at right angles to the axial direction is made in each of the contact pins (22), and **in that**
the wires (20) connected to the contact pins (22) are each guided through one such hole in a contact pin (22).

2. Electric motor according to claim 1,
**characterised in that**
the contacting regions (26) of the support (24) project away from the axis of rotation (D) in the radial direction.

3. Electric motor according to claim 1,
**characterised in that**
the contacting regions (26) of the support (24) project away from the winding overhangs (16) in the axial direction.

4. Electric motor according to any of the preceding claims,
**characterised in that**
the stator (10) has a stator core (12) having a plurality of stator laminations and a hollow-cylindrical stator casing (14),
the stator windings being arranged in the stator core (12), and
the stator core (12) being arranged in the hollow-cylindrical stator casing (14), and **in that** the support (24) is rigidly connected to the stator casing (14).

5. Electric motor according to claim 4,
**characterised in that**
the support (24) extends fully over the stator casing (14) in the circumferential direction.

6. Electric motor according to claim 4,
**characterised in that**
the support (24) extends only partially over the stator casing (14) in the circumferential direction.

7. Electric motor according to any of claims 4 to 6,
**characterised in that**
an attachment element (30) is fastened to the stator casing (14) and has contacting elements (36) which are electrically and mechanically connected to the contacting regions (26) of the support (24), and **in that**
the attachment element (30) has a circuit board (34) to which electrically conductive conducting tracks are applied, and **in that**
the contacting elements (36) are applied to the circuit board (34), and **in that** electronic elements (39) are applied to the circuit board (34).

8. Electric motor according to any of the preceding claims,
**characterised in that**
the contacting regions (26) of the support (24) comprise at least one contact element for connecting a temperature probe, an angular position sensor, a brake and/or a communication bus.

9. Electric motor according to any of the preceding claims,
**characterised in that**
the electric motor comprises a plurality of holding pins (23) which are integrally bonded to the support (24), and **in that**
the holding pins (23) are arranged between the axis of rotation (D) and the winding overhangs (16) in the radial direction, and **in that**
the winding overhangs (16) are arranged between the contact pins (22) and the axis of rotation (D) in the radial direction.

10. Electric motor according to claim 9,
**characterised in that**
the stator (10) has a winding support (18) made of an electrically insulating material, and **in that**
the contact pins (22) and the holding pins (23) are integrally bonded to and/or frictionally connected to the winding support (18).

11. Electric motor according to claim 10,
**characterised in that**
the holding pins (23) each have a disc-like enlargement that abuts an end face of the winding support (18).

12. Electric motor according to any of claims 9 to 11,
**characterised in that**
the contact pins (22) and the holding pins (23) are formed similarly.

13. Electric motor according to any of the preceding claims,
**characterised in that**
the contact pins (22) each have a disc-like enlargement that abuts the support (24).

## Revendications

1. Moteur électrique, comprenant un stator (10), lequel présente une pluralité d'enroulements de stator, et un rotor, lequel est apte à tourner autour d'un axe de rotation (D) relativement au stator (10), des fils électriquement conducteurs (20) dépassant des têtes d'enroulement (16) des enroulements de stator, dans lequel les fils (20) sont électriquement reliés à un support rigide en forme de plaque (24), et dans lequel le support (24) est conçu comme une carte de circuits imprimés et présente une plaque électriquement isolante, sur laquelle sont appliquées des pistes conductrices électriquement conductrices, et dans lequel les fils (20) sont reliés de manière adhésive à des broches de contact (22), lesquelles sont reliées de manière adhésive au support (24) en dépassant axialement, et dans lequel le support (24) présente des zones de contact (26) pour la réalisation de connexions enfichables, dans lequel les zones de contact (26) sont conçues comme une barre de douilles ou comme une barre de fiches, **caractérisé en ce que** les broches de contact (22) présentent une section transversale carrée et **en ce que**, dans les broches de contact (22), un perçage est respectivement réalisé, lequel s'étend perpendiculairement à la direction axiale, et **en ce que** les fils (20), qui sont reliés aux broches de contact (22), sont respectivement guidés à travers un tel perçage dans une broche de contact (22).

2. Moteur électrique selon la revendication 1, **caractérisé en ce que** les zones de contact (26) du support (24) dépassent en direction radiale à partir de l'axe de rotation (D).

3. Moteur électrique selon la revendication 1, **caractérisé en ce que** les zones de contact (26) du support (24) dépassent en direction axiale à partir des têtes d'enroulement (16).

4. Moteur électrique selon l'une des revendications précédentes, **caractérisé en ce que** le stator (10) présente un paquet de stator (12) avec plusieurs tôles de stator et un boîtier de stator creux cylindrique (14), les enroulements de stator étant disposés dans le paquet de stator (12), et le paquet de stator (12) étant disposé dans le boîtier de stator creux cylindrique (14), et **en ce que** le support (24) est relié de manière rigide au boîtier de stator (14).

5. Moteur électrique selon la revendication 4, **caractérisé en ce que** le support (24) s'étend complètement en direction circonférentielle sur le boîtier de stator (14).

6. Moteur électrique selon la revendication 4, **caractérisé en ce que** le support (24) ne s'étend que partiellement en direction circonférentielle sur le boîtier de stator (14).

7. Moteur électrique selon l'une des revendications 4 à 6, **caractérisé en ce qu'**un élément rapporté (30) est fixé au boîtier de stator (14), lequel présente des éléments de contact (36) qui sont reliés électriquement et mécaniquement aux zones de contact (26) du support (24), et **en ce que** l'élément rapporté (30) présente une carte électronique (34), sur laquelle sont appliquées des pistes conductrices électriquement conductrices, et **en ce que** les éléments de contact (36) sont appliqués sur la carte électronique (34), et **en ce que** des composants électroniques (39) sont appliqués sur la carte électronique (34).

8. Moteur électrique selon l'une des revendications précédentes, **caractérisé en ce que** les zones de contact (26) du support (24) comprennent au moins un élément de contact pour le raccordement d'un capteur de température, d'un capteur de position angulaire, d'un frein et/ou d'un bus de communication.

9. Moteur électrique selon l'une des revendications précédentes, **caractérisé en ce que** le moteur électrique comprend une pluralité de broches de maintien (23), lesquelles sont reliées de manière adhésive au support (24), et **en ce que** les broches de maintien (23) sont disposées en direction radiale entre l'axe de rotation (D) et les têtes d'enroulement (16), et **en ce que** les têtes d'enroulement (16) sont disposées en direction radiale entre les broches de contact (22) et l'axe de rotation (D).

10. Moteur électrique selon la revendication 9, **caractérisé en ce que** le stator (10) présente un support d'enroulement (18) en matériau électriquement isolant, et **en ce que** les broches de contact (22) ainsi que les broches de maintien (23) sont reliées de manière adhésive et/ou de manière mécanique au support d'enroulement (18).

11. Moteur électrique selon la revendication 10, **caractérisé en ce que** les broches de maintien (23) présentent respectivement un élargissement en forme de disque, lequel est en appui contre une face frontale du support d'enroulement (18).

12. Moteur électrique selon l'une des revendications 9 à 11, **caractérisé en ce que** les broches de contact (22) et les broches de maintien (23) sont conçues de manière identique.

13. Moteur électrique selon l'une des revendications précédentes, **caractérisé en ce que** les broches de contact (22) présentent respectivement un élargissement en forme de disque, lequel est en appui contre le support (24).
